# EUROPÄISCHE PATENTSCHRIFT

(11) **EP 3 496 930 B1**
(45) Veröffentlichungstag und Bekanntmachung des Hinweises auf die Patenterteilung: **25.08.2021**
(21) Anmeldenummer: 17754066.3
(22) Anmeldetag: 24.07.2017
(51) Int. Cl.: F16H 55/17, B29C 48/09, B29C 48/12, B29D 15/00

(54) **VERFAHREN ZUR HERSTELLUNG EINES HOHLRADS FÜR EIN PLANETENGETRIEBE UND BAUKASTENSYSTEM MIT EINEM SOLCHEN HOHLRAD**
METHOD FOR PRODUCING A RING GEAR FOR A PLANETARY GEARING AND MODULAR SYSTEM HAVING SUCH A RING GEAR
PROCÉDÉ DE FABRICATION D'UNE COURONNE POUR UNE BOÎTE DE VITESSES À TRAINS ÉPICYCLOÏDAUX ET SYSTÈME MODULAIRE POURVU D'UNE TELLE COURONNE

(30) Priorität: 12.08.2016 DE 102016115043
(43) Veröffentlichungstag der Anmeldung: 19.06.2019
(73) Patentinhaber: Bühler Motor GmbH, 90459 Nürnberg (DE)
(72) Erfinder: RICHTER, Olaf, 90547 Stein (DE); KIRCHGESSNER, Daniel, 97222 Rimpar (DE)
(86) Internationale Anmeldenummer: PCT/DE2017/200071
(87) Internationale Veröffentlichungsnummer: WO 2018/028750

(56) Entgegenhaltungen:
- WO-A1-2015/185399
- CA-A1- 2 646 077
- DE-A1- 10 217 848
- DE-A1-102015 204 755
- DE-B3-102005 028 828
- US-A- 3 412 632
- US-A- 3 596 538
- US-A- 3 847 056
- US-A- 4 337 672
- US-A- 5 392 517
- US-A- 5 551 270
- US-A- 5 732 586
- US-A1- 2005 046 290

## Beschreibung

Die Erfindung betrifft ein Verfahren zur Herstellung eines Hohlrads für ein Planetengetriebe, ein Hohlrad und ein Baukastensystem mit einem solchen Hohlrad.

Planetengetriebe sind allgemein bekannt und werden aufgrund ihres geringen Volumens sowie der dabei erzielten hohen Drehmomente in vielen Anwendungsfeldern bevorzugt eingesetzt. Bei einem Planetengetriebe greifen die Zähne einer Vielzahl von Planetenrädern von außen in die Zähne eines auf einer Welle gelagerten Sonnenrades ein. Die Zähne der Planetenräder greifen ferner in die Zähne eines um die Planetenräder herumlaufenden Hohlrades ein. Das Hohlrad bildet also die äußere Begrenzung des Planetengetriebes.

Die Herstellung solcher Hohlräder wird bisher vor allem im Bereich kleiner Leistungen durch ein Spritzgussverfahren umgesetzt.

Ein Nachteil der Herstellung mit dem Spritzgussverfahren sind die hohen Kosten, insbesondere für die Herstellung der Spritzgusswerkzeuge. Für jede Spezifikation eines Hohlrades, also zum Beispiel unterschiedliche Stufenanzahl oder Drehmomentbelastbarkeit, muss ein neues Spritzgusswerkzeug hergestellt werden. Dies erhöht jedoch nicht nur die Kosten, sondern auch die Herstellungszeit eines Hohlrades.

Die hohen Kosten sind insbesondere von Nachteil, wenn Kleinserien von Planetengetrieben hergestellt werden sollen. Diese Kleinserien können mit den bisherigen Herstellungsverfahren nicht mit geringen Kosten produziert werden.

Die US 3 596 538 A offenbart ein Hohlrad für ein Planetengetriebe mit einem aus Kunststoff extrudierten innenverzahnten Hohlradkörper und einem Lagerschild, wobei das Lagerschild auf den Hohlradkörper montiert ist.

Aus der US 4 337 672 A ist ein Verfahren zur Herstellung eines Hohlrads für ein Planetengetriebe bekannt, wobei ein Endlosprofil durch einen Extrusionsprozess hergestellt wird und das Endlosprofil zur Bildung eines Hohlradkörpers anschließend auf eine vorbestimmte Schnittlänge geschnitten wird und durch den Extrusionsprozess eine Innenverzahnung im Endlosprofil ausgebildet wird.

Die US 3 412 632 A offenbart ein kompaktes Stirnrad-Differenzial bestehend aus fünf Teilen, bei dem alle Teile vorzugsweise aus dem gleichen Material, einem geeigneten Kunststoffmaterial, hergestellt werden können und bei dem die Zahnräder in die endgültige Form extrudiert und anschließend das Profil auf die gewünschte Zahnbreite geschnitten wird.

Aus der WO 2015/185399 A1 ist ein Hohlrad für ein Getriebe eines Kraftfahrzeugs und ein Verfahren zu dessen Herstellung bekannt. Das Hohlrad umfasst einen Träger, der die Form eines Ringes aufweist und die innere Mantelfläche eine Verzahnung aufweist, wobei die Verzahnung durch zylinderförmige Elemente gebildet wird, wobei die zylinderförmigen Elemente parallel zur Mittelachse des Trägers rotationssymmetrisch und gleichverteilt angeordnet sind, wobei die zylinderförmigen Elemente zumindest abschnittsweise mit einem Polymer umspritzt sind.

Die CA 2 646 077 A1 offenbart ein Motorsystem, umfassend einen Motor mit einem Rotor und ein Planetengetriebe, das den Rotor des Motors mit der Last verbindet, ein erstes Getriebe aus Kunststoff, das mit dem Rotor verbunden ist und ein Planetengetriebe aus Kunststoff, das vom ersten Getriebe angetrieben werden kann, um eine Drehzahl des Rotors zu reduzieren und ein Abtriebselement, das mit der Last verbunden werden kann, wobei das erste Getriebe und das Planetengetriebe schmiermittelfrei sind.

Aus der US 2005/046290 ist ein Stellantrieb bekannt, umfassend eine Längsachse Z aufweisenden Gehäuse, in welchem ein Elektromotor mit Ritzel angeordnet ist, bei dem das Ritzel mit mindestens jeweils einem ersten Zahnrad eines Planetenradgetriebes im Eingriff steht, das jeweils zusammen mit einem, direkt benachbart angeordneten zweiten Zahnrad ein einheitliches Doppelzahnrad bildet, bei dem die jeweils ersten Zahnräder in einem ersten Zahnring laufen, der fest mit dem Gehäuse verbunden ist und die jeweils zweiten Zahnräder in einem drehbar gelagerten zweiten Zahnring laufen, der mit dem anzutreibenden Teil in Verbindung steht, wobei die Anzahl der Zähne des ersten Zahnringes nicht mit der Anzahl der Zähne des zweiten Zahnringes identisch ist.

Die US 5 551 270 A offenbart das Formen von Innenverzahnungen von Schrägverzahnungen, insbesondere auf die Verwendung von Kaltfließpressen zum Formen eines Hohlrades mit Innenverzahnung. Die Metallgetriebeteile werden mit einem Schneidverfahren nachgearbeitet.

Aus der US 5 732 586 A ist ein Verfahren zum Kaltformen von Keilen und Zähnen an einem Zahnrad bekannt, bei dem Innenzahnkranzzähne und Außenvorsprünge kalt extrudiert werden. Das Verfahren umfasst das Bearbeiten eines Zahnkranzrohlings mit präzisen Innen- und Außendurchmessern. Der Zahnradrohling ist auf einem Formring gelagert, der koaxial zum Rohling angeordnet ist. Der Matrizenring hat Innenverzahnungen. Ein Dorn mit äußeren Gesenkzähnen ist axial mit dem Zahnradrohling ausgerichtet. Der Dorn wird axial bewegt, um den Rohling durch die inneren und äußeren Formzähne zu extrudieren. Die Metallgetriebeteile werden durch Schneidverfahren nachgearbeitet.

Die US 3 847 056 A offenbart die Herstellung von Gegenständen mit Innenzähnen, wie Zahnrädern, durch Extrusion, bei der die metallischen Gegenstände durch Schneidverfahren nachbearbeitet werden.

Aus der US 5 392 517 ist ein Zahnkranz, der aus einem Rohling gebildet wird bekannt, der aus einem heißen extrudierten Rohrmaterial entnommen wird. Das Rohrmaterial wird auf vorbestimmte Abmessungen extrudiert, die wesentlich kleiner als der fertige Hohlradrohling sind. Aus dem Rohrmaterial wird ein Ringrohling geschnitten und gemessen, um dessen Masse zu bestimmen. Der Rohling wird expandiert, indem er auf neue Innen- und Außendurchmesser und neue Breite gerollt wird. Danach wird ein Satz Zahnradzähne am Umfang des expandierten Rohlings gebildet.

Die DE 10 2015 204 755 A1 offenbart ein Verfahren zum Herstellen eines Antriebsrades für einen Nockenwellenversteller und ein Antriebsrad für einen Nockenwellenversteller. Eine Tragscheibe des Antriebsrades ist durch kreisförmigen Materialabtrag an einer ersten Seite und an einer zweiten Seite ausgebildet. Ein Strang wird mittels eines Extrusionsprozesses hergestellt und davon ein Rohling abgeschnitten, der entsprechend bearbeitet wird, um das Antriebsrad auszubilden.

Aus der DE 10 2005 028 828 B3 ist ein Verfahren und eine Vorrichtung zum Herstellen von Metallringen, die am Innenumfang mit einem axial durchgehenden Innenprofil und am Außenumfang mit einem radialen Außenprofil versehen sind bekannt.

Die DE 102 17 848 A1 offenbart ein Verfahren zur Herstellung von Schiebemuffen für Schaltgetriebe umfassend einen ersten Umformschritt, bei dem ein über einen Werkzeugdorn mit Außenverzahnung geschobener Vorformling mittels Drückwalzen umgeformt wird, um die an der äußeren Umfangsfläche des Werkzeugdorns ausgebildete Verzahnung an der inneren Umfangsfläche des Vorformlings auszubilden. In einem zweiten Umformschritt wird der derart umgeformte Vorformling durch Profilwalzen an seiner äußeren Umfangsfläche zu einem Umformteil umgeformt und zuletzt aus dem Umformteil entnommen.

Ausgehend von diesem Stand der Technik ist es Aufgabe der vorliegenden Erfindung, ein Verfahren zur Herstellung eines Hohlrades für ein Planetengetriebe anzugeben, das eine einfache Herstellung eines Hohlrads ermöglicht und die Herstellungskosten senkt und mit dem auch kurzfristig Hohlräder mit geänderten Spezifikationen hergestellt werden können. Ferner ist es Aufgabe der vorliegenden Erfindung ein Hohlrad für ein Planetengetriebe anzugeben, welches einfach an individuelle Kundenspezifikationen angepasst werden kann. Darüber hinaus ist es Aufgabe der vorliegenden Erfindung ein Baukastensystem mit Planetenrädern und unterschiedlichen Hohlrädern anzugeben.

Diese Aufgabe wird durch ein Verfahren nach Anspruch 1 gelöst.

Das vorstehend beschriebene Verfahren verwendet also einen Extrusionsprozess, um ein Hohlrad herzustellen. Bei einem Extrusionsprozess wird ein Endlosprofil unter Druck kontinuierlich aus einer formgebenden Öffnung, einer sogenannten Matrize, herausgepresst. Der dadurch erzeugte Hohlradkörper wird gemäß dem vorstehend beschriebenen Verfahren auf eine vorbestimmte Schnittlänge geschnitten. Das vorstehend beschriebene Verfahren erlaubt also die einfache Fertigung beliebiger Längen von Hohlradkörpern. Ferner kann mit dem vorstehend beschriebene Verfahren eine Vielzahl von Hohlradkörpern schnell hintereinander hergestellt werden.

Durch den Extrusionsprozess kann eine Innenverzahnung am Endlosprofil ausgebildet werden.

Es ist also möglich, dass durch den Extrusionsprozess unmittelbar die Innenverzahnung ausgebildet wird. Damit entfallen weitere Bearbeitungsschritte, sodass das hergestellte Hohlrad unmittelbar einsatzbereit ist. Ferner ist es mit der beschriebenen Ausführungsform des Verfahrens möglich, die Matrize für den Extrusionsprozess auszutauschen, um eine weitere Konfiguration des Hohlrades herzustellen. Zum Beispiel kann die Anzahl der Zähne des Hohlrades, die letztendlich das Übersetzungsverhältnis des Planetengetriebes mitbestimmt, angepasst werden.

Zudem kann das Endlosprofil gratfrei geschnitten werden.

Beim Schneiden des Hohlradkörpers auf eine vorbestimmte Schnittlänge ist es von Vorteil, wenn das Schneiden gratfrei ausgeführt wird. Dadurch entfallen weitere Nachbearbeitungsschritte, die eventuell manuell ausgeführt werden müssen. In einer besonders vorteilhaften Ausführungsform kann das Schneiden ein Laserschneiden am rotierenden Endprofil umfassen. Laserschneiden ermöglicht bereits bei einer geringen Mindeststückzahl eine kostendeckende Produktion.

Zudem kann der Hohlradkörper und/oder das Lagerschild aus einem Kunststoff hergestellt werden.

Kunststoff ist ein kostengünstiges Material, welches sich unter Wärme gut verformen lässt und sich insbesondere bei niedrigen Leistungsanforderungen als vorteilhaft herausgestellt hat. Insbesondere Thermoplaste wie z.B. Polybutylenterephthalat (PBT) (verstärkt oder unverstärkt), Polyoxymethylen (POM), Polyamide (PA), Polyethersulfon (PES) oder Polyetherketone (PEEK) (verstärkt oder unverstärkt) sind bevorzugt eingesetzte Kunststoffe.

In einer Ausführungsform kann das Endlosprofil mehrfach geschnitten werden, wobei unterschiedliche Schnittlängen eingestellt werden können.

Es ist also möglich, dass aus einem Endlosprofil eine Vielzahl von unterschiedlichen Hohlrädern hergestellt wird. Dabei kann sich jedes Hohlrad in seiner Schnittlänge unterscheiden. So können unterschiedliche Stufen eines Getriebes aus einem einzigen Endlosprofil hegestellt werden.

In einer Ausführungsform kann ein Lagerschild bereitgestellt werden und auf dem Hohlradkörper montiert werden.

Ein Lagerschild stellt eine individuell anzupassende Kundenschnittstelle dar. Es ist daher von Vorteil, wenn das Lagerschild separat von dem Hohlradkörper hergestellt wird. Wenn zum Beispiel eine Vielzahl von Hohlradkörpern mit unterschiedlicher Schnittlänge aus einem einzigen Endlosprofil hergestellt werden, kann jedes einzelne Hohlrad für verschiedene Kunden mit unterschiedlichen Lagerschildern versehen werden. Somit kann noch kosteneffizienter produziert werden.

Das Lagerschild kann mit dem Hohlradkörper fügeverbunden werden, um das Lagerschild an dem Hohlrad zu montieren. Das Fügeverbinden kann zum Beispiel durch Heißverprägen, Kleben, Radialverschrauben, Laserdurchstrahlschweißen oder durch Schweißprozesse (IR-Schweißen, Heizelementschweißen sowie Reibschweißen) ausgeführt werden.

Dadurch, dass serienreife Fügeverfahren verwendet werden, kann eine hohe Qualität und kostendeckende Produktion des Hohlrades sichergestellt werden.

Ein weiterer Aspekt der Erfindung betrifft ein Hohlrad für ein Planetengetriebe mit einem aus Kunststoff extrudierten innenverzahnten Hohlradkörper und einem Lagerschild, wobei das Lagerschild auf den Hohlradkörper montiert ist.

In einer Ausführungsform kann das Lagerschild mit dem Hohlradkörper fügeverbunden sein.

In einer weiteren Ausführungsform kann der Hohlradkörper und/oder das Lagerschild aus einem Kunststoff bestehen.

Es ergeben sich ähnliche oder identische Vorteile, wie sie bereits mit dem vorstehend beschriebenen Verfahren oder der Verwendung eines Extrusionsprozesses zur Herstellung eines Hohlrads beschrieben wurden.

Vorzugsweise bildet das Hohlrad mit dem Lagerschild ein Gehäuse.

Wenn der Hohlradkörper mit dem Lagerschild zusammen ein Gehäuse bildet, wird eine besonders kompakte Bauweise ermöglicht. Durch die runde, homogene Außenkontur in Verbindung mit der stirnseitigen Montage des Lagerschildes wird kein weiteres Gehäuse benötigt und dadurch in Bezug auf den Durchmesser Bauraum eingespart.

Die der Erfindung zugrundeliegende Aufgabe wird ferner gelöst durch ein Baukastensystem mit Planetenrädern und unterschiedlichen Hohlrädern, die zu Planetengetrieben mit unterschiedlichen Stufen kombinierbar sind, wobei die Hohlräder jeweils nach einem der vorstehend beschriebenen Hohlräder ausgebildet sind und durch ein Verfahren, wie es vorstehend beschrieben wurde, hergestellt sind.

Insbesondere, wenn ein komplettes Baukastensystem mit Planetenrädern und unterschiedlichen Hohlrädern bereitgestellt wird, kommen die vorstehend beschriebenen Vorteile besonders zur Geltung. Es ist so möglich, die unterschiedlichen Stufen eines Baukastensystems aus einem einzigen Endlosprofil herzustellen. Dadurch wird die Herstellungszeit deutlich reduziert.

Weitere Ausführungsformen ergeben sich aus den Unteransprüchen.

Nachfolgend wird die Erfindung mittels mehrerer Ausführungsbeispiele beschrieben, die anhand von Abbildungen näher erläutert werden. Hierbei zeigen:
Figur 1 eine schematische Ansicht eines Planetengetriebes 1;
Figur 2 eine schematische Ansicht eines Endlosprofils 16;
Figur 3 unterschiedliche Hohlradkörper 12;
Figur 4 eine Draufsicht auf ein Hohlrad 10;
Figur 5 ein Flussdiagramm zur Herstellung eines Hohlrades 10; und
Figur 6 einen Hohlradkörper 12 mit einem Lagerschild 15.

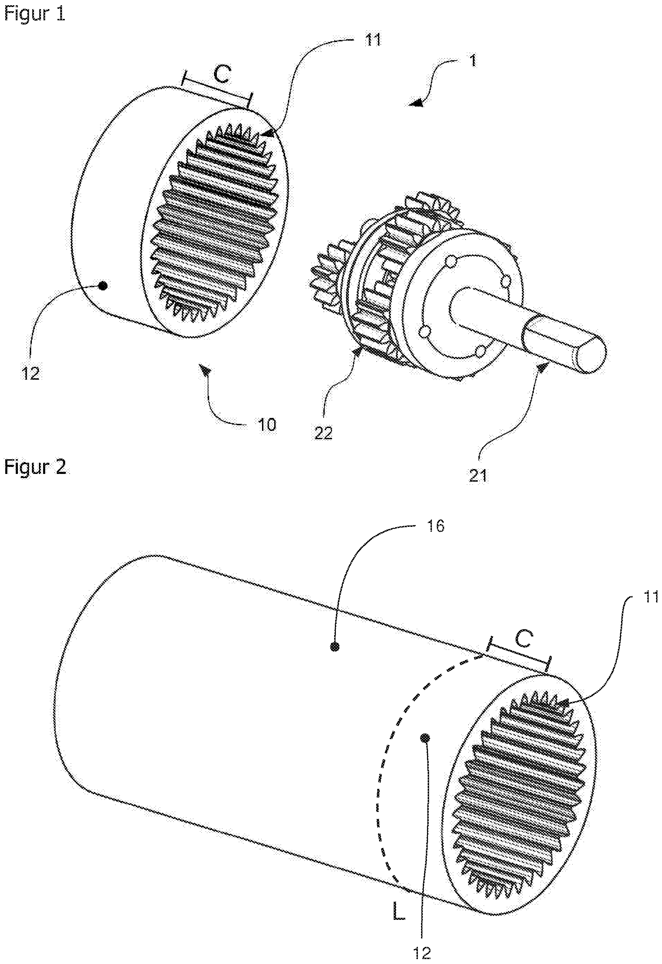

Figur 1 zeigt schematisch ein Planetengetriebe 1, welches aus einem Hohlrad 10 und Planetenrädern 22, die in ein auf einer Welle 21 gelagertes Sonnenrad eingreifen, gebildet wird. Das Hohlrad 10 umfasst einen Hohlradkörper 12 und ist an der Innenseite des Hohlradkörpers 12 mit einer Innenverzahnung 11 ausgebildet. Der Hohlradkörper 12 ist auf eine Schnittlänge C geschnitten.

Im zusammengesetzten Zustand kann das Planetengetriebe in unterschiedlichen Konfigurationen betrieben werden. In einem Ausführungsbeispiel ist das Hohlrad 10 fest, d.h. es dreht sich nicht im Betrieb. Der Abtrieb wird dann über die sich um ein Sonnenrad drehenden Planetenräder 22 abgenommen. Als Antrieb dient die mit dem Sonnenrad verbundene Welle 21.

In einem weiteren Ausführungsbeispiel ist das Hohlrad 10 drehend ausgebildet. Dabei kann der Abtrieb vom Hohlrad 10 abgenommen werden und die Welle 21 dient als Antrieb.

Selbstverständlich ist in weiteren Ausführungsbeispielen eine umgekehrte Konfiguration denkbar, in der das Hohlrad 10 als Antrieb fungiert, und der Abtrieb von der Welle 21 abgenommen wird.

Figur 2 zeigt das Hohlrad 10 der Figur 1, bevor es aus einem Endlosprofil 16 geschnitten wurde. Das Endlosprofil 16 ist in dem dargestellten Ausführungsbeispiel durch ein Extrusionsverfahren hergestellt und kann eine beliebige Länge aufweisen. Um aus dem Endlosprofil 16 ein Hohlrad 10 herzustellen, wird das Endlosprofil 16 entlang einer Schnittlinie L so abgeschnitten, dass ein Hohlradkörper 12 mit einer Schnittlänge C gebildet wird. Das Schneiden des Endlosprofils 16 wird in dem dargestellten Ausführungsbeispiel unter Verwendung von Laserschneiden ausgeführt.

Die Innenverzahnung 11 ist bereits während des Extrusionsverfahrens durch die Form der verwendeten Matrize ausgebildet worden. Nach dem Abschneiden des Hohlradkörpers 12 von dem Endlosprofil 16 entlang der Schnittlinie L liegt also unmittelbar ein funktionsfähiges Hohlrad 10 vor.

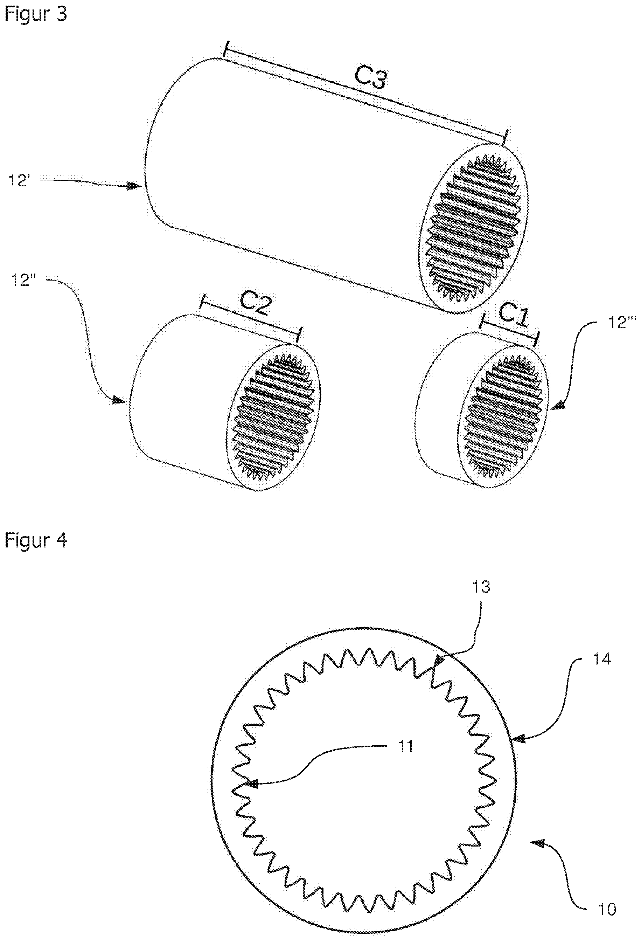

Figur 3 zeigt drei Hohlradkörper 12', 12", 12"', die aus demselben Endlosprofil 16 mit unterschiedlichen Schnittlängen C1, C2, C3 herausgeschnitten sind. In dem dargestellten Ausführungsbeispiel wird ein Thermoplast, nämlich verstärktes PBT, als Material für die Hohlradkörper 12', 12", 12'" verwendet.

Die verschiedenen Hohlradkörper 12', 12", 12'" werden zu Planetengetrieben mit unterschiedlichen Stufen kombiniert.

Figur 4 zeigt ein Hohlrad 10 in einer Draufsicht. Figur 4 zeigt deutlich, dass an der Innenseite 13 des Hohlrades 10 Innenverzahnungen 11 vorgesehen sind, die mit den Zähnen eines Planetenrades können. In dem dargestellten Ausführungsbeispiel ist das Hohlrad 10 als umlaufendes Hohlrad 10 ausgebildet, so dass die erzielte Übersetzung des Planetengetriebes 1 vom Hohlrad 10 abgenommen werden kann.

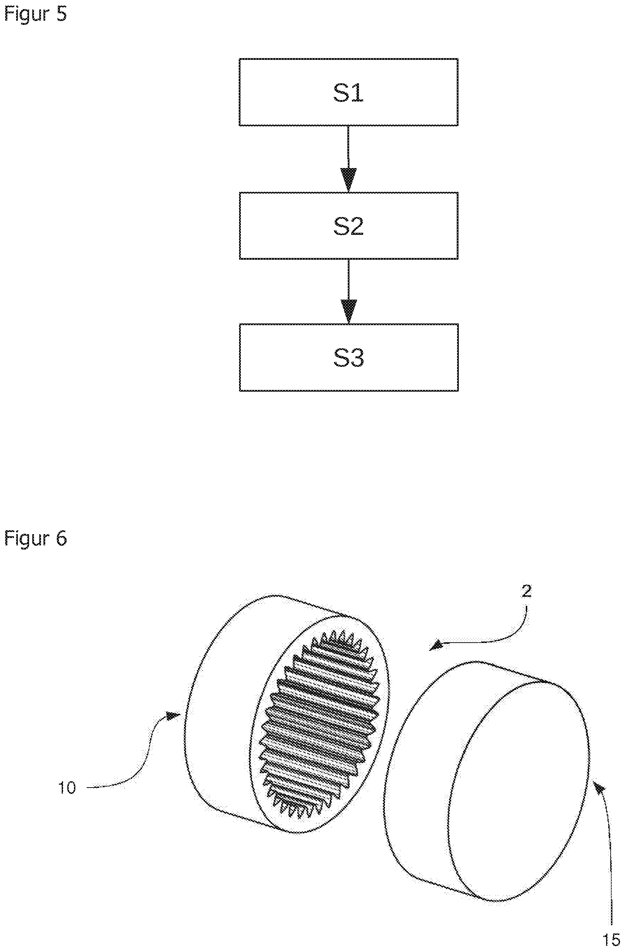

Figur 5 zeigt ein Flussdiagramm für ein Verfahren zur Herstellung eines Hohlrades 10. Im Schritt S1 wird ein Endlosprofil durch einen Extrusionsprozess hergestellt. Dabei wird in dem dargestellten Ausführungsbeispiel ein Kunststoff verwendet. Im Schritt S1 kann insbesondere ein Kunststoffgranulat auf eine Schnecke geführt und erhitzt werden. Die verwendeten Kunststoffgranulate sind im geschmolzenen Zustand zähflüssig. Die Schnecke fördert das Granulat in Richtung der Matrize und wird dabei unter Druck gesetzt. Unter Druck wird das geschmolzene Kunststoffgranulat durch die Matrize gepresst und bildet so das Endlosprofil 16. Im Schritt 2 wird von dem Endlosprofil 16 ein Hohlradkörper 12 mit einer Schnittlänge C, C1, C2, C3 abgeschnitten. Zum Abschneiden wird in dem dargestellten Ausführungsbeispiel ein Laserschneideverfahren verwendet. In anderen Ausführungsbeispielen ist es jedoch auch möglich, Wasserstrahlschneiden oder Drahterodieren zu verwenden.

Nach Abschluss des Schritts S3 liegt ein voll funktionstüchtiges Hohlrad 10 vor.

Figur 6 zeigt ein Hohlrad 10 mit einem Lagerschild 15, die zusammen ein Gehäuse 2 bilden. Das Lagerschild 15 wird durch ein Fügeverfahren mit dem Hohlrad 10 verbunden. In dem dargestellten Ausführungsbeispiel wird das Lagerschild 15 mit dem Hohlrad 10 verklebt.

Das Lagerschild 15 bildet eine kundenspezifische Schnittstelle und wird daher erst nach der Herstellung des Hohlrads 10 mit diesem verbunden.

### Bezugszeichenliste

- 1: Planetengetriebe
- 2: Gehäuse
- 10: Hohlrad
- 11: Innenverzahnung
- 12, 12', 12", 12"': Hohlradkörper
- 13: Innenseite
- 14: Außenseite
- 15: Lagerschild
- 16: Endlosprofil
- 21: Welle am Sonnenrad
- 22: Planetenrad
- C, C1, C2, C3: Schnittlänge
- L: Schnittlinie
- S1, S2, S3: Schritt

## Patentansprüche

1. Verfahren zur Herstellung eines Hohlrads (10) für ein Planetengetriebe (1),
wobei ein Endlosprofil (16) durch einen Extrusionsprozess hergestellt und das Endlosprofil (16) zur Bildung eines Hohlradkörpers (12, 12', 12", 12"') anschließend auf eine vorbestimmte Schnittlänge (C, C1, C2, C3) geschnitten wird und dass durch den Extrusionsprozess eine Innenverzahnung (11) im Endlosprofil (16) ausgebildet wird, wobei das Endlosprofil (16) gratfrei geschnitten wird durch Laserschneiden am rotierenden Endprofil und dass der Hohlradkörper (12, 12', 12", 12'") und/oder ein Lagerschild (15) aus einem Kunststoff hergestellt wird.

2. Verfahren nach einem der vorhergehenden Ansprüche,
**dadurch gekennzeichnet, dass**
das Endlosprofil (16) mehrfach geschnitten wird, wobei unterschiedliche Schnittlängen (C, C1, C2, C3) eingestellt werden.

3. Verfahren nach einem der vorhergehenden Ansprüche,
**dadurch gekennzeichnet, dass**
ein Lagerschild (15) bereitgestellt und auf den Hohlradkörper (12, 12', 12", 12"') montiert, insbesondere mit dem Hohlradkörper (12, 12', 12", 12"') fügeverbunden, wird.

4. Hohlrad (10) für ein Planetengetriebe (1) mit einem aus Kunststoff extrudierten, innenverzahnten Hohlradkörper (12, 12', 12", 12"') und einem Lagerschild (15), wobei das Lagerschild (15) auf den Hohlradkörper (12, 12', 12", 12'") montiert ist, **dadurch gekennzeichnet, dass** das Hohlrad (10) durch ein Verfahren nach den Ansprüchen 1-3 hergestellt ist.

5. Hohlrad (10) nach Anspruch 4,
**dadurch gekennzeichnet, dass**
das Lagerschild (15) mit dem Hohlradkörper (12, 12', 12", 12''') fügeverbunden ist.

6. Hohlrad (10) nach einem der Ansprüche 4 bis 5,
**dadurch gekennzeichnet, dass**
der Hohlradkörper (12, 12', 12", 12"') mit dem Lagerschild (15) ein Gehäuse (2) bildet.

7. Baukastensystem, hergestellt mit einem Verfahren nach Anspruch 1, mit Planetenrädern und unterschiedlichen Hohlrädern (10), die zu Planetengetrieben mit unterschiedlichen Stufen kombinierbar sind, wobei die Hohlräder (10) jeweils nach einem der Ansprüche 4 bis 6 ausgebildet sind.

## Claims

1. A method for producing a ring gear (10) for a planetary gear train (1), wherein a continuous profile (16) is produced by an extrusion process and the continuous profile (16) is subsequently cut to a predetermined cut length (C, C1, C2, C3) to form a ring gear body (12, 12', 12'', 12''') and an internal toothing (11) is formed in the continuous profile (16) by the extrusion process, wherein the continuous profile (16) is cut without burrs by laser cutting at the rotating end profile and the ring gear body (12, 12', 12'', 12''') and/or an end shield (15) is produced from a plastic.

2. The method according to one of the preceding claims,
**characterized in that**
the continuous profile (16) is cut multiple times, wherein different cut lengths (C, C1, C2, C3) are set.

3. The method according to one of the preceding claims,
**characterized in that**
an end shield (15) is provided and mounted on the ring gear body (12, 12' 12'', 12'''), in particular joined to the ring gear body (12, 12', 12'', 12''').

4. A ring gear (10) for a planetary gear train (1) having an internally toothed ring gear body (12, 12', 12'', 12''') extruded from plastic and an end shield (15), wherein the end shield (15) is mounted on the ring gear body (12, 12', 12'', 12'''), **characterized in that** the ring gear (10) is produced by a method according to Claims 1-3.

5. The ring gear (10) according to Claim 4,
**characterized in that**
the end shield (15) is joined to the ring gear body (12, 12', 12'', 12''').

6. The ring gear (10) according to one of Claims 4 to 5,
**characterized in that**
the ring gear body (12, 12', 12", 12''') forms a housing (2) with the end shield (15).

7. A modular system, produced by a method according to Claim 1, having planetary gears and different ring gears (10), which can be combined to form planetary gear trains with different stages, wherein the ring gears (10) are each formed according to one of Claims 4 to 6.

## Revendications

1. Procédé pour fabriquer une couronne (10) pour une boîte de vitesses à trains épicycloïdaux (1), dans lequel un profilé sans fin (16) est fabriqué par un processus d'extrusion et le profilé sans fin (16) est ensuite découpé à une longueur de coupe (C, C1, C2, C3) prédéfinie pour la formation d'un corps de couronne (12, 12', 12", 12'") et qu'une denture intérieure (11) est réalisée dans le profilé sans fin (16) par le processus d'extrusion, dans lequel le profilé sans fin (16) est découpé sans bavures par découpe laser sur le profilé d'extrémité rotatif et que le corps de couronne (12, 12', 12", 12'") et/ou un flasque (15) est fabriqué à partir d'une matière plastique.

2. Procédé selon l'une quelconque des revendications précédentes,
**caractérisé en ce que**
le profilé sans fin (16) est découpé à plusieurs reprises, dans lequel différentes longueurs de coupe (C, C1, C2, C3) sont réglées.

3. Procédé selon l'une quelconque des revendications précédentes,
**caractérisé en ce que**
un flasque (15) est fourni et monté sur le corps de couronne (12, 12', 12", 12'"), en particulier relié au corps de couronne (12, 12', 12", 12'") par assemblage.

4. Couronne (10) pour une boîte de vitesses à trains épicycloïdaux (1) avec un corps de couronne (12, 12', 12", 12'") à denture intérieure, extrudé en matière plastique et un flasque (15), dans laquelle le flasque (15) est monté sur le corps de couronne (12, 12', 12", 12'"), **caractérisée en ce que** la couronne (10) est fabriquée par un procédé selon l'une quelconque des revendications 1-3.

5. Couronne (10) selon la revendication 4,
**caractérisée en ce que**
le flasque (15) est relié au corps de couronne (12, 12', 12", 12'") par assemblage.

6. Couronne (10) selon l'une quelconque des revendications 4 à 5,
**caractérisée en ce que**
le corps de couronne (12, 12', 12", 12'") forme avec le flasque (15) un carter (2).

7. Système modulaire, fabriqué avec un procédé selon la revendication 1, avec des satellites et différentes couronnes (10), qui peuvent être combinés en boîtes de vitesses à trains épicycloïdaux avec différents étages, dans lequel les couronnes (10) sont réalisées respectivement selon l'une quelconque des revendications 4 à 6.
